# EUROPEAN PATENT APPLICATION

(11) **EP 4 138 077 A1**
(43) Date of publication of application: **22.02.2023**
(21) Application number: 22190207.5
(22) Date of filing: 12.08.2022
(51) Int. Cl.: G11B 7/0065, G11B 7/007

(54) **OPTICAL TRACK FORMAT FOR HOLOGRAPHIC STORAGE OPTICAL DISC AND ENCODING METHOD THEREOF**

(30) Priority: 12.08.2021 CN 202110923861
(71) Applicant: Amethystum Storage Technology Co., Ltd., Meizhou, Guangdong 514700 (CN)
(72) Inventor: HU, Dejiao, Shejiang Town, Mei County Meizhou,, 514700 (CN); LIU, Yicheng, Shejiang Town, Mei County Meizhou, 514700 (CN); TIAN, Jun, Shejiang Town, Mei County Meizhou, 514700 (CN); TAO, Xiaoxiao, Shejiang Town, Mei County Meizhou, 514700 (CN)
(74) Representative: Puschmann Borchert Kaiser Klettner Patentanwälte Partnerschaft mbB

(57) **Abstract**

An optical track format of a holographic storage optical disc includes a lead-in area (3), a data area (4) and a lead-out area (5). The data area (4) is provided with data holographic positioning marks (2) for marking reading/writing position of data holograms on the optical track and start positioning marks (1) for marking position on the optical track where data holograms start to be recorded. The start positioning marks (1) may also contain address encoding information. Such optical track can be encoded by performing binary encoding by length of the optical track between two consecutive notches, or performing binary encoding by high and low levels of a level signal.

## Description

### TECHNICAL FIELD

The present invention relates to the field of holographic storage, and more particularly, relates to a method for arranging marks in a holographic storage optical disc and a method for reading/writing holograms.

### BACKGROUND

The holographic optical storage technology is a storage method by loading data information into a signal light beam in form of a two-dimensional data page image, and exposing the signal light beam with a reference light beam in an optical disc to form a hologram, i.e. a holographic grating, with periodic refractive index modulation to save information. By illuminating the hologram with the reference light, the signal light carrying the data information can be reproduced, the stored information thus can be read. Due to its advantages of large storage capacity and long storage life, such storage method has become a promising archival-level data storage method.

Since the hologram exists as a volume Bragg grating occupying a certain volume in the optical disc, multiplexing recording of the hologram is required to achieve a higher storage capacity. Currently, multiplexing methods for holographic storage recording and reproducing mainly include shift multiplexing, angle multiplexing, cross multiplexing, wavelength multiplexing, polarization multiplexing. Shift multiplexing is the most basic and common multiplexing method, which is achieved that a large number of holograms are recorded in a shift overlapping manner within an area by moving the medium in a certain small step length and recording the hologram after each movement. Shift multiplexing includes off-axis holographic spherical wave shift multiplexing and on-axis holographic speckle shift multiplexing. In these two kinds of shift multiplexing, the shift thereof has two orthogonal directions, namely, x and y directions, or tangential and radial directions, with same or different shift distances in the two orthogonal directions. For spherical wave shift multiplexing, the shift distances in two orthogonal directions are different. However, the shift multiplexing method makes it impossible to reproduce data page information with a high signal-to-noise ratio when the reproducing reference light deviates from the original position by a small displacement during the reproduction of the hologram, which thus requires the hologram to be accurately positioned in the recording and reproducing process.

In order to achieve accurate displacement distance control and accurately position the reading/writing position of the holograms in the holographic storage optical disc, optical tracks and positioning marks in the optical disc are thus required.

### SUMMARY

The present invention thus provides an optical track format for a disc type holographic storage optical disc and a method for encoding the optical track format, which meet the requirements of quickly positioning a specific hologram in the circular holographic storage optical disc efficiently and simply, thereby achieving high-speed reading and writing of holographic storage data.

According to the present invention, the optical track format for a holographic storage optical disc includes a lead-in area, a data area and a lead-out area. The lead-in area is used for storing the characteristic information, product information, and reading/writing parameters of the optical disc, and holograms for calibrating an incident light, etc. The data area is used for recording data holograms loaded with data. The lead-out area is used for storing disc sealing information. The data area is provided with two kinds of marks including data holographic positioning marks and start positioning marks. Each data holographic positioning mark is used for marking a reading/writing position of the data hologram on the optical track. Each start positioning mark is used for marking a position on the optical track where the data hologram starts to be recorded. The start positioning marks can also contain address encoding information. Calibration holographic positioning marks are provided in the lead-in area for marking the position of a calibration hologram on the optical track. All the marks on the optical track are able to be positioned or read information therein by the incident light.

The configuration of the start positioning mark s and the data holographic positioning marks in the data area can effectively divide the information on the optical disc. The optical track and the reading/writing position of the data holograms can be positioned according to the marks, so that the incident light can quickly positioned and addressed the reading/writing position of the data holograms, thereby improving the reading/writing efficiency of the data holograms. By arranging the calibration holographic positioning marks in the lead-in area, a reference beam during reproducing can be calibrated by the calibration holograms at the calibration holographic positioning marks. When recording data, the calibration hologram is written at each calibration holographic positioning mark in the lead-in area, and when reading the data, by reproducing the calibration holograms, the irradiation position and angle of reproducing reference light is calibrated to reach maximum diffraction efficiency and signal-to-noise ratio of the calibration holograms, so that the data holograms can be accurately reproduced.

According to the present invention, the optical track includes plurality of ridges or grooves on the inner surface of a substrate of the holographic storage optical disc. Each ridge or groove is provided with a plurality of notches, and two ends of each notch includes a descending end with a reduced height and an ascending end with a raised height. The heights of the ascending end and the descending end are equal, and the height thereof is less than or equal to 1/4 of the wavelength of incident light. The lead-in area and the lead-out area are also provided with a plurality of notches for storing relevant information. Each holographic positioning mark is one notch on the optical track or the ascending end or descending end thereof. The start positioning mark includes at least one notch on the optical track and a plurality of sections of the ridges or the grooves separated by the at least one notch.

With a plurality of notches in the lead-in area and the lead-out area of the optical track, the characteristic information, product information, reading/writing parameters and disc sealing information of the optical track can be stored in the plurality of sections of the ridges or grooves separated by the notches.

Directed to different methods for reading/writing data holograms, the optical track can be designed in form of concentric circles or a spiral line.

When the optical track is in form of concentric circles with a certain spacing, the start positioning marks divide the optical track into a plurality of sectors. The lead-in area is arranged on a plurality of concentric circles closest to the center of the optical disc, the lead-out area is arranged on a plurality of concentric circles furthest away from the center of the optical disc, and the data area is arranged on the concentric circles between the lead-in area and the lead-out area. In the optical track in form of concentric circles, each start positioning mark has a front end, an address field and a back end. The address field is located between the front end and the back end, and optical track information and sector information are recorded in the address field. In the optical track in form of concentric circles, spacing between the circular optical tracks determines the distance of radial shift multiplexing.

When the optical track is in form of an equidistant spiral line from the inside to the outside, the lead-in area is arranged on a plurality of spiral turns closest to the center of the optical disc, the lead-out area is arranged on a plurality of spiral turns furthest away from the center of the optical disc, and the data area is arranged on the spiral turns between the lead-in area and the lead-out area. The start positioning marks are respectively arranged at the head end and the tail end of the data area. In the optical track in form of spiral line, the start positioning mark has a front end and a back end.

The optical track in form of spiral line has a certain spacing to determine the distance of radial shift multiplexing. The start positioning mark at the head end of the data area is used for positioning the position on the optical track where the data hologram starts to be recorded, and the start positioning mark at the tail end of the data area is used for positioning the position where the recording of the data hologram ends. Since the spiral line optical track does not distinguish sectors from the optical track, start positioning marks are not required on the optical track in form of spiral line to record optical track information and sector information, so that the start positioning mark on the optical track in spiral line thus only contains the front end and the back end for identifying the start positioning mark .

When an incident light spot covers the ascending end and the descending end of the notch at the same time and is located at the center of the notch, light reflected is diverged into three light beams along the optical track direction, and light intensities of the light beams on two sides are equal in this case. When an incident light spot covers the ascending end or/and the descending end of the notch and deviates from the center of the notch, the light reflected is diverged into three light beams along the optical track direction, and the light intensities of the light beams on two sides are unequal in this case. The reflected light beams are received by a light intensity sensor to conduct comparison of light intensity, and is converted into an analogue voltage signal which is referred to as a tangential push pull signal (TPP).

Specifically, the reflected light beams can be received by a four-quadrant photodetector, which including four areas A, B, C and D, for receiving light reflected back from the optical track. The difference of light intensity signals of the two areas AB and CD in the optical track direction is the tangential push pull signal, namely TPP=(I_{A}+I_{B})-(I_{C}+I_{D}).

The notches in the optical track can be divided into short notches and long notches according to the length thereof.

When the notches on the optical track are all short notches with fixed length, and the incident light spot can cover both the ascending end and the descending end thereof at the same time, the tangential push pull signal in the notch is converted into a single high-level signal, and the tangential push pull signals in the remaining positions are respectively converted into low-level signals.

When the notches on the optical track are all long notches, the incident light spot cannot cover the ascending end and the descending end thereof at the same time, the tangential push pull signals corresponding to the ascending end and the descending end thereof are respectively further converted into two high-level signals, and the tangential push pull signals corresponding to the remaining positions are respectively further converted into low-level signals

Therefore, the specific structure of the optical track is identified according to different level signals according to the present invention.

The holographic positioning mark is one notch on the optical track, and a section of the ridge or groove between two adjacent holographic positioning marks is a minimum continuous unit on the optical track. The length of the minimum continuous unit is greater than the length of the notch.

When the holographic positioning mark is a short notch, the incident light spot can cover the ascending end and the descending end thereof at the same time, therefore, the tangential push pull signal corresponding to the holographic positioning mark is the single high-level pulse signal, the holographic positioning mark thus can be identified by the single high-level pulse signal without encoding. When the holographic positioning mark is a long notch, the incident light spot cannot cover the ascending end and the descending end thereof at the same time, the tangential push pull signal corresponding to the holographic positioning mark is two high-level pulse signals, and the holographic positioning mark thus can be identified by the pulse signals without encoding. The start positioning mark in the optical track in spiral line is a section of optical track with a certain unique structure, corresponding to a level signal with a certain unique waveform, so that the start positioning mark of the optical track in spiral line can be identified by the level signal with the certain unique waveform without encoding.

By encoding the above-mentioned optical track format, the relevant information in the lead-in area, the lead-out area and the start positioning mark of the optical track can be quickly identified.

Two encoding methods are provided to encode the optical track format.,

One method includes performing binary encoding by the length of the optical track between two consecutive notches. Such optical track length determines the time interval between the ascending edges of the two consecutive high-level singles. The spatial distance between the ascending ends of two consecutive holographic positioning marks and the time interval between the corresponding ascending edges of the high-level signals are defined as the code element length T in spatial domain and time domain, respectively. "0" is encoded as the optical track with a distance T between the ascending ends of two notches; and "1" is encoded as an optical track with a distance nT between the ascending ends of two notches, wherein n is a positive integer, n# 1.

In the start positioning marks, the distance between the ascending ends of the notches on two sides of the front end or the duration between corresponding ascending edges of high-level signals is correspondingly aT, wherein a is a positive integer, a>n; and the distance between the ascending ends of the notches on two sides of the back end or the duration between corresponding ascending edges of the high-level signals is correspondingly bT-(b+1)T, wherein b is a positive integer, b>n, b≠a, and the values of n, a and b shall have obvious difference.

The other method includes performing binary encoding by high and low levels of a level signal. "1" is encoded as a high level in the notch or the ascending end or descending end thereof, the duration of the high-level signal is defined as a code element length T; and "0" is encoded as a low level, the duration of a low level is an integer multiple of the code element length, i.e. the number of "0" .

The front end and the back end of the start positioning mark are respectively optical track which can be detected as level signals with a certain unique waveform.

Compared with the prior art, some beneficial effects of the present invention can be obtained.

With the plurality of start positioning mark s and holographic positioning marks on the optical track, the positions of tens of thousands of optical tracks and tens of millions of data holograms in the optical disc can be quickly positioned/addressed by the incident light, which improves the reading/ writing efficiency of the data holograms.

The holographic positioning mark for positioning and calibration is arranged in the lead-in area, when reading, by reproducing the calibration holograms at the position of the calibration holographic positioning mark, the reference beam in the reproduction process can be calibrated, so that the reference beam in the reproduction process is equal to a reference beam in the recording process, thereby improving the accuracy of reproducing the hologram.

The reflected light has different light intensities with height difference between the notch of the marks and the optical track plane can be converted into different level signals, thereby identifying the holographic positioning marks and the start positioning marks on the optical track.

The optical track of the present invention is encoded in simple and efficient method, so that the optical track itself carries the relevant information.

### BRIEF DESCRIPTION OF THE DRAWINGS

FIG. 1 is a schematic diagram showing distribution of start positioning mark s and holographic positioning marks on an optical track in form of concentric circles of an optical disc according to one embodiment.
FIG. 2 is a schematic diagram showing encoding of the start positioning mark s and a part of the start positioning marks on the optical track in form of concentric circles according to one embodiment.
FIG. 3 is a schematic diagram showing encoding of the start positioning mark s and a part of the start positioning marks on the optical track in form of concentric circles according to one embodiment.
FIG. 4 is a schematic diagram showing encoding of the start positioning mark s and a part of the start positioning marks on the optical track in form of concentric circles according to one embodiment.
FIG. 5 is a schematic diagram of a hologram storage trajectory on the optical track in form of concentric circles of the optical disc according to one embodiment.
FIG. 6 is a signal receiving and light spot intensity distribution diagram of a four-quadrant detector according to one embodiment.
FIG. 7 is a schematic diagram of a tangential push pull signal and a level signal of a short notch according to one embodiment.
FIG. 8 is a schematic diagram of a tangential push pull signal and a level signal of a long notch according to one embodiment.
FIG. 9 is a schematic diagram of an optical track in form of spiral line and start positioning mark s and holographic positioning marks on the optical track of the optical disc according to one embodiment.

### DETAILED DESCRIPTION

The accompanying drawings of the present invention are only used for exemplary illustration, and should not be construed as limitation to the present invention. In order to better illustrate the following embodiments, some parts of the drawings may be omitted, enlarged or reduced, which do not represent the size of the actual product; for those skilled in the art, it is understandable that some well-known structures and their descriptions in the drawings may be omitted.

An optical track format for a holographic storage optical disc is provided according to one embodiment, which includes a lead-in area 3, a data area 4 and a lead-out area 5. The lead-in area is configured for storing characteristic information, product information, and reading/writing parameters of the optical disc, and holograms for calibrating an incident light, etc. The data area is configured for recording holograms loaded with data. The lead-out area is used for storing disc sealing information. Two kinds of marks exist in the data area, including data holographic positioning marks 2 for marking a reading/writing position of the data hologram on the optical track and start positioning marks 1 for marking a position on the optical track where the data hologram starts to be recorded. The start positioning marks can also contain address encoding information. Calibration holographic positioning marks 2 are provided in the lead-in area, which are configured for marking the position of a calibration hologram on the optical track. All the marks on the optical track are able to be positioned or read information therein by the incident light.

The configuration of the start positioning marks 1 and the data holographic positioning marks 2 in the data area can effectively divide the information on the optical disc, the optical track and the reading/ writing position of the data holograms can be positioned according to the marks, so that the incident light can quickly position and address the reading/ writing position, thereby improving the reading/ writing efficiency of the hologram. By arranging the calibration holographic positioning marks 2 in the lead-in area, a reference beam during reproducing can be calibrated by the calibration holograms at the calibration holographic positioning marks. When recording data, the calibration hologram is written at each calibration holographic positioning mark in the lead-in area, and when reading data, by reproducing the calibration holograms, the irradiation position and angle of reproducing reference light is calibrated to reach maximum diffraction efficiency and signal-to-noise ratio of the calibration holograms, so that the data can be accurately reproduced.

According to one embodiment, the optical track includes a plurality of ridges or grooves on the inner surface of a substrate of the holographic storage optical disc. Each ridge or groove is provided with a plurality of notches, and two ends of each notch includes a descending end with a reduced height and an ascending end with a raised height. The heights of the ascending end and the descending end are equal, and the height thereof is less than or equal to 1/4 of the wavelength of incident light. At least one notch provided in the lead-in area and the lead-out area are for storing relevant information. The data holographic positioning marks and the calibration holographic positioning marks are the notches on the optical track or the ascending end or descending end of the notches. The start positioning mark is comprised of at least one notch on the optical track and a plurality of sections of the ridges or grooves separated by the notch. With a plurality of notches in the lead-in area and the lead-out area of the optical track, the characteristic information, product information, reading/ writing parameters and sealing information of the optical track can be stored in the plurality of sections of the ridge or groove separated by the notches.

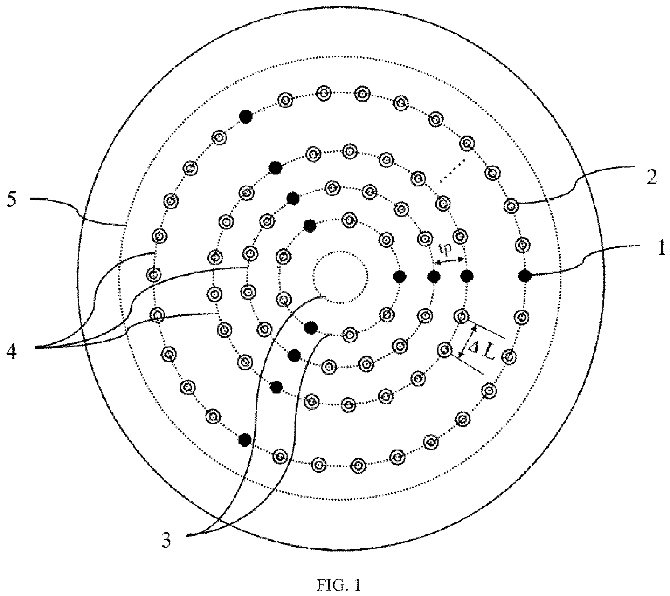

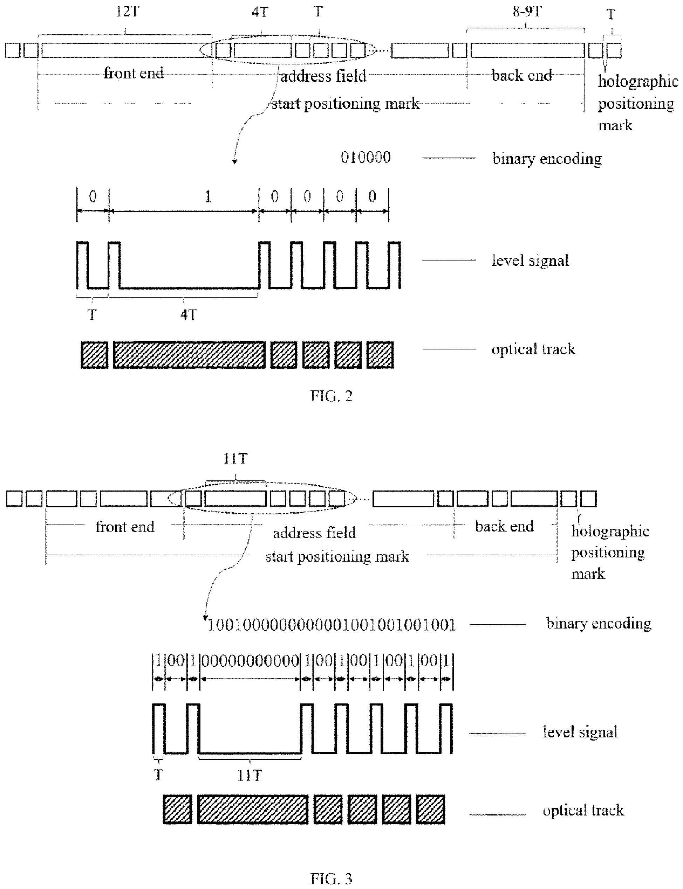

As shown in FIG. 1, in this embodiment, the optical track is in form of concentric circles with a certain spacing tp, and the distance between two adjacent holographic positioning marks is Δ L. A plurality of start positioning marks are provided in the optical track to divide the optical track into a plurality of sectors, so that the light beam can determine the optical track located and the sector located according to the start positioning marks, and can further determine the reading/writing position of the hologram in the sector by the holographic positioning marks. According to this embodiment, two concentric circles of the optical track closest to the center of the optical disc form the lead-in area 3, the concentric circle of the optical track furthest away from the center of the optical disc forms the lead-out area 5, and the other concentric circles form the data area 4. The concentric circle with the smallest radius in the lead-in area records the characteristic information, product information and reading/writing parameters of the optical disc. In the lead-in area, a plurality of start positioning marks 1 and calibration holographic positioning marks 2 are provided on the concentric circle of the optical track with a larger radius. The start positioning marks 1 are used for positioning the incident light and the calibration holographic positioning marks 2 are used for calibrating the incident light. The holographic positioning mark of the optical track in FIG. 1 is only partially shown as a schematic illustration. Referring to FIG. 2, each start positioning mark on the optical track includes a front end, an address field and a back end, the address field is located between the front end and the back end and configured for recording the optical track information and sector information. The front end and the back end are used for identifying the start positioning mark, and the optical track information and the sector information recorded in the address field are used for identifying the position of the start positioning mark in the optical track.

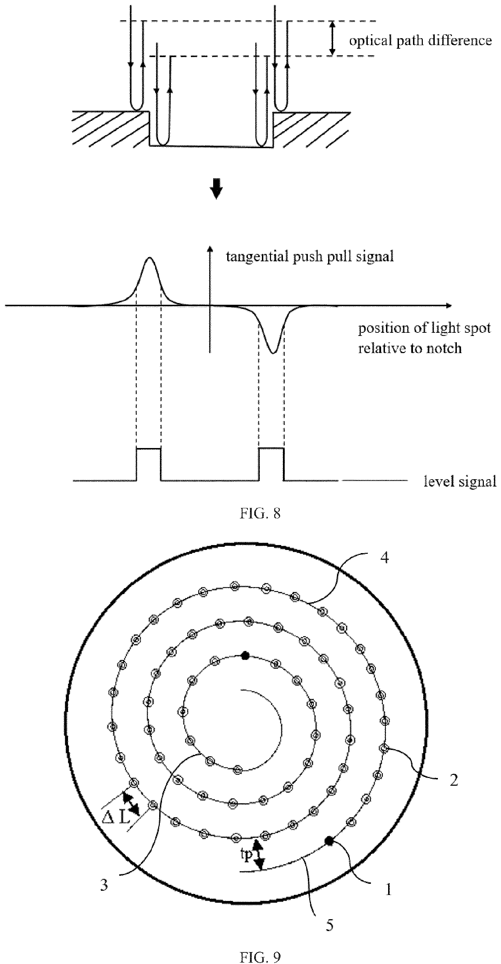

FIG. 9 shows another optical track format of a holographic storage optical disc according to one embodiment. The optical track in this embodiment is in form of an equidistant spiral line from inside to outside, tp is the distance between the spiral line of the optical track, and the distance between two adjacent holographic positioning marks is ΔL. A section of the spiral line closest to the center of the optical disc forms the lead-in area, a section of spiral line farthest away from the center of the optical disc is the lead-out area. The head end and the tail end of the data area are respectively provided with a start positioning mark. The start positioning mark at the head end of the data area is used for positioning a place on the optical track where the data hologram starts to be recorded, and the start positioning mark at the tail end of the data area is used for positioning a place where the recording of the data hologram ends. The section of the spiral line in the lead-in area closest to the center of the optical disc records the characteristic information, product information and reading/writing parameters of the optical disc, and other section of the spiral line in the lead-in area are provided with the calibration holographic positioning marks for calibrating the incident light. Since the optical track in form of spiral line is not divided the optical track into sectors, the start positioning marks in the optical track in form of spiral line does not need to record optical track information and sector information, so that the start positioning mark in the optical track in form of the spiral line thus only contains a front end and a back end for identifying the start positioning mark.

In the optical track in form of concentric circles, when the hologram is recorded, the shift multiplexing distance L along the optical track direction is an integer multiple of the interval ΔL between the holographic positioning marks, namely, L=c×ΔL, c≥1, wherein c is a positive integer, and the radial shift multiplexing distance r of the hologram is an integer multiple of the distance tp between adj acent concentric circles of the optical track, namely, r=d×tp, d≥1, wherein d is a positive integer. While in the optical track in form of the spiral line, when the hologram is recorded, the shift multiplexing distance L in the optical track direction is an integer multiple of the interval ΔL between the holographic positioning marks, namely, L=c×ΔL, c≥1, wherein c is a positive integer, and the radial shift multiplexing distance r of the hologram is equal to the distance tp between adjacent optical tracks, namely, r=tp.

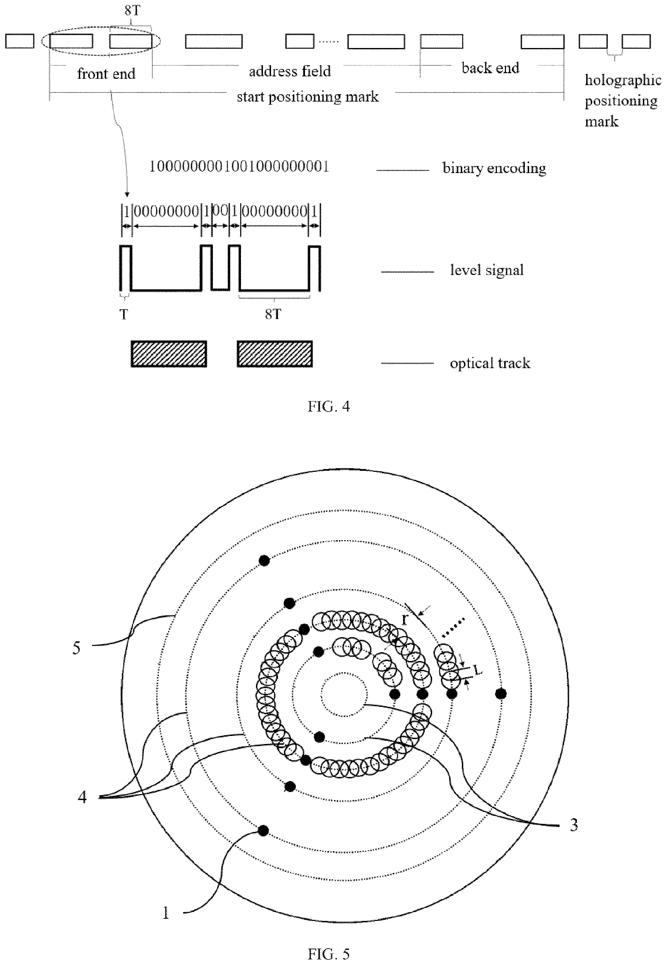

Specifically, as exemplary illustration, FIG. 5 shows a holographic storage optical disc with the optical track in form of concentric circles, when recording, the characteristic information, product information and reading/ writing parameters of the optical disc are firstly read on the concentric circle of the optical track closest to the center of the optical disc in the lead-in area 3. One start positioning mark 1 in the lead-in area 3 is then positioned and a plurality of calibration holograms for calibration are recorded in the sector at such start positioning mark 1 in the lead-in area. One start positioning mark 1 on the optical track in the data area 4 is then positioned and the data holograms are recorded in the sector where such start positioning mark 1 in the data area 4 is located. When the sector where the start positioning mark 1 is located is recorded the data holograms completely, another start positioning mark 1 of the optical track is positioned and the data holograms are recorded in the sector where such start positioning mark 1 is located. When reading, the characteristic information, product information and reading and writing parameters of the optical disc are firstly read on the concentric circle of the optical track closest to the center of the optical disc in the lead-in area 3. Then, through the start positioning mark and the calibration holographic positioning mark in the lead-in area 3, the calibration hologram in the lead-in area for calibration is positioned, and by reproducing the calibration hologram, the irradiation position and angle of a reproducing reference beam is adjusted to reach the maximum diffraction efficiency and the signal-to-noise ratio of the calibration hologram. The start positioning mark on the optical track in the data area is then positioned and the data holograms are read in the sector where the start positioning mark in the data area is located, and the data holograms in other sectors of the optical track are then read sequentially. When the data holograms in the data area is read completely, the lead-out area is positioned, the sealing information of the optical disc is read, and the reading process is thus completed.

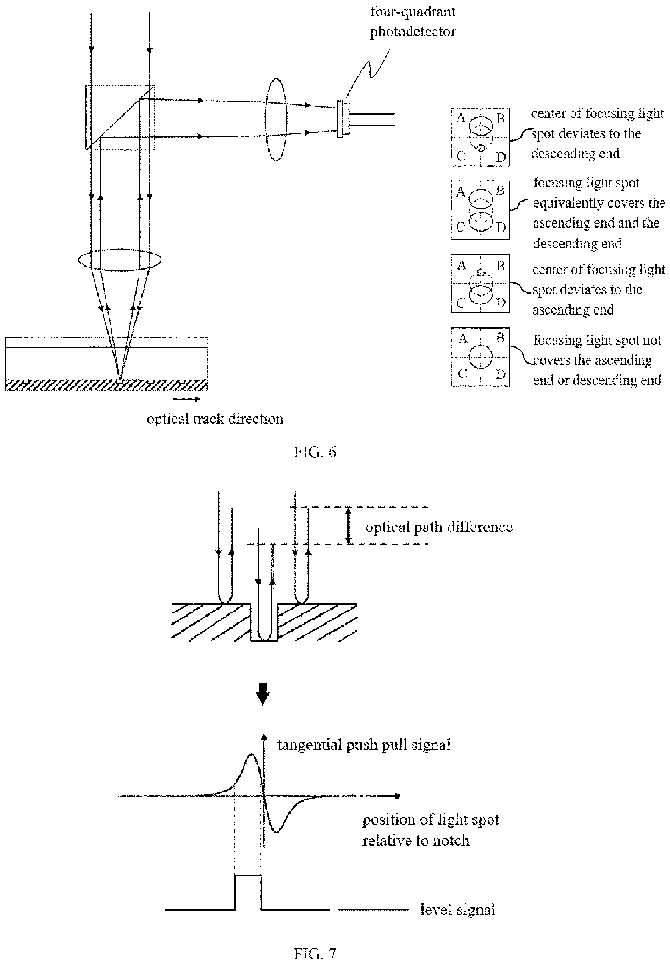

A method for encoding the optical track format for the holographic storage optical disc mentioned above is provided according to one embodiment. As shown in FIG. 6, when an incident light spot covers the ascending end and the descending end of the corresponding notch at the same time and is located at the center of the notch, light reflected is diverged into three light beams in the optical track direction, and the light intensities of light beams on two sides are equal. When an incident light spot covers the ascending end or/and the descending end of the notch and deviates from the center of the notch, light reflected is diverged into three light beams in the optical track direction, and the light intensities of the light beams on two sides are unequal. The reflected light beams are received by a four-quadrant photodetector to conduct comparison of light intensity, and each reflected light beam is converted into an analogue voltage signal, namely, a tangential push pull signal (TPP). The four-quadrant photodetector includes four areas A, B, C and D for receiving light reflected back from the optical track. The difference of light intensity signals of the two areas AB and CD in the optical track direction is the tangential push pull signal, TPP=(I_{A}+I_{B})-(I_{C}+I_{D}).

Preferably, all the notches in the optical track are all short notches with fixed length. The holographic positioning mark is one notch on the optical track, and a section of the ridge or the groove between two adjacent holographic positioning marks is a minimum continuous unit on the optical track, and the length of the minimum continuous unit is greater than the length of the notch. FIG. 2 shows a partial structure of the optical track.

Referring to FIG. 7, when the notch is a short notch, the incident light spot can cover both the ascending end and the descending end thereof at the same time, the tangential push pull signal thereof is further converted into a single high-level signal, and the tangential push pull signals corresponding to the remaining positions are further converted into low-level signals. The structure of the optical track can be identified according to different level signals.

Since the notches of the holographic positioning marks are all short notches, namely, the incident light spot can cover the ascending end and the descending end thereof at the same time, the tangential push pull signal corresponding to the holographic positioning marks is the single high-level pulse signal, so that the holographic positioning marks can be identified by the single high-level pulse signal without encoding.

By encoding the above-mentioned optical track format, the relevant information in the lead-in area, the lead-out area and the start positioning marks of the optical track thus can be quickly identified.

The specific encoding method includes, as shown in FIG. 2, performing binary encoding by length of the optical track between two consecutive notches, such optical track length can determine the time interval between two consecutive high-level ascending edges. The spatial distance between the ascending ends of two holographic positioning marks and the time interval between their corresponding high-level ascending edges defined as a code element length T in spatial domain and time domain, respectively.

In this method "0" is encoded as the optical track with a distance T between the ascending ends of two notches, and "1" is encoded as the optical track with a distance 4T between the ascending ends of two notches.

As exemplary illustration, FIG. 2 shows encoding of a section of the start positioning mark . The address field in FIG. 2 has seven notches, the distance between the first notch and the second notch from left to right is T, thus encoding as 0, the distance between the second notch and the third notch is 4T, thus encoding as 1, and the distance between the third notch and the fourth notch, between the fourth notch and the fifth notch, between the fifth notch and the sixth notch, and between the sixth notch and the seventh notch is T, so that the four spacing are encoded as 0, respectively. Code of the address field shown in FIG. 2 thus is 010000.

Preferably, in the start positioning mark, the distance between the ascending ends of the notches on two sides of the front end or the duration between corresponding ascending edges of the high-level signals is correspondingly 12T, and the distance between the ascending ends of the notches on two sides of the back end or the duration between corresponding ascending edges of the high-level signals is correspondingly 8T-9T.

During moving of the incident light spot from left to right along the optical track, when a low-level signal with a duration of 12T is identified, it indicates that the front end of the start positioning mark of the optical track is reached, so that an optical track number and a sector number in the address field start to be read. When a low-level signal with a duration of 8T-9T is identified, it indicates that the back end of the start positioning mark is reached, the identification of the start positioning mark ends, then reading/writing of data holograms in the sector starts, or moving to other positions to identify other start positioning marks.

By binary coding, the relevant information in the lead-in area, the lead-out area and the start positioning mark are recorded in the optical track. The binary encoding method proposed in this embodiment herein is simple and efficient, without involving a complicated encoding process, and can effectively screen out useful information in the optical track.

Another method for encoding the optical track format of the holographic storage optical disc mentioned above is provided according to one embodiment. As shown in FIG. 6, when an incident light spot covers the ascending end and the descending end of the notch at the same time and is located at the center of the notch, the light reflected is diverged into three light beams in the optical track direction, and the light intensities of the light beams on two sides are equal; when an incident light spot covers the ascending end or/and the descending end of the notch and deviates from the center of the notch, the light reflected is diverged into three beams in the optical track direction, and the light intensities of the light beams on two sides are unequal. The light beams reflected are received by a four-quadrant photodetector to conduct comparison of light intensity and is converted into an analogue voltage signal, namely, a tangential push pull signal (TPP). The four-quadrant photodetector includes four areas A, B, C and D for receiving light reflected back from the optical track. The difference of light intensity signals of the two areas AB and CD in the optical track direction is the tangential push pull signal, TPP=(I_{A}+I_{B})-(I_{C}+I_{D}).

Preferably, all the notches in the optical track are all short notches with fixed length. The holographic positioning mark is the notch on the optical track, and a section of the ridge or the groove between two adjacent holographic positioning marks is a minimum continuous unit on the optical track, and the length of the minimum continuous unit is greater than the length of the notch. FIG. 3 shows a partial structure of the optical track.

Referring to FIG. 7, when the notch is the short notch, the incident light spot can cover both the ascending end and the descending end thereof at the same time, the tangential push pull signal thereof is further converted into a single high-level signal, and the tangential push pull signals corresponding to the remaining positions are further converted into low-level signals. The specific structure of the optical track can be identified according to different level signals.

Since the notches of the holographic positioning mark are all short notches, namely, the incident light spot can cover the ascending end and the descending end thereof at the same time, the tangential push pull signal corresponding to the holographic positioning mark is the single high-level pulse signal, so that the holographic positioning mark can be identified by the single high-level pulse signal without encoding.

By encoding the above-mentioned optical track format, the relevant information in the lead-in area, the lead-out area and the start positioning marks of the optical track can be quickly identified.

The specific encoding method includes: as shown in FIG. 3, performing binary encoding by high and low levels of a level signal. "1" is encoded as a high level corresponding to the notch or the ascending end or descending end thereof, the duration of the high-level signal is defined as a code element length T; and "0" is encoded as a low level, the duration of a continuous low level is an integer multiple of the code element length, i.e. the number of "0".

As exemplary illustration, FIG. 3 shows encoding of the start positioning mark in a section of optical track in form of concentric circles. The address field in FIG.3 shows a total of seven notches, each notch corresponding to a high-level signal, each is thus encoded as "1". The distance between the first notch and the second notch from left to right is 2T, thus encoding as 00; the distance between the second notch and the third notch is 11T, thus encoding as 00000000000; the distance between the third notch and the fourth notch, between the fourth notch and the fifth notch, between the fifth notch and the sixth notch, and between the sixth notch and the seventh notch is 2T, so that the four spacing are encoded as 00, respectively. Code of the address field shown in FIG. 3 thus is 1001000000000001001001001001.

Preferably, in the start positioning mark, the front end and the back end are respectively a section of the optical track in a level signal with a certain unique waveform.

During moving of the incident light spot from left to right along the optical track, when the level signal of a certain unique waveform of the front end is identified, it indicates that the front end of the start positioning mark of the optical track is reached, and an optical track number and a sector number in the address field start to be read; when the level signal of a certain unique waveform of the back end is identified, it indicates that the back end of the start positioning mark is reached, the identification of the start positioning mark ends, then reading/writing of the data holograms in the sector starts, or moving to other positions to identify other start positioning marks.

By binary coding, the relevant information in the lead-in area, the lead-out area and the start positioning mark is recorded in the optical track. The binary encoding method proposed in this embodiment herein is simple and efficient, without involving a complicated encoding process, and can effectively screen out useful information in the optical track.

Another method for encoding an optical track format of a holographic storage optical disc mentioned above is provided according to one embodiment. As shown in FIG. 6, when an incident light spot covers the ascending end and the descending end of the notch at the same time and is located at the center of the notch, the light reflected is diverged into three light beams in the optical track direction, and the light intensities of the light beams on two sides are equal; when an incident light spot covers the ascending end or/and the descending end of the notch and deviates from the center of the notch, the light reflected is diverged into three light beams in the optical track direction, and the light intensities of the light beams on two sides are unequal. The reflected light beams are received by a four-quadrant photodetector to conduct comparison of light intensity and is converted into an analogue voltage signal, namely, a tangential push pull signal (TPP). The four-quadrant photodetector includes four areas A, B, C and D for receiving light reflected back from the optical track. The difference of light intensity signals of the two areas AB and CD in the optical track direction is the tangential push pull signal, TPP=(I_{A}+I_{B})-(I_{C}+I_{D}).

Preferably, all the notches in the optical track are all long notches. The holographic positioning mark is the notch on the optical track, and a section of the ridge or the groove between two adjacent holographic positioning marks is a minimum continuous unit on the optical track, and the length of the minimum continuous unit is greater than the length of the notch. FIG. 4 shows a partial structure of such optical track

As shown in FIG. 8, when the notch is the long notch, the incident light spot cannot cover the ascending end and the descending end thereof at the same time, and the tangential push pull signals corresponding to the ascending end and the descending end thereof are respectively further converted into two high-level signals; and the tangential push pull signals corresponding to the remaining positions are further converted into low-level signals. Accordingly, the specific structure of the optical track can be identified according to different level signals.

Since the holographic positioning mark is the long notch on the optical track, the incident light spot cannot cover the ascending end and the descending end thereof at the same time, the tangential push pull signal corresponding to the holographic positioning mark is two high-level pulse signals, so that the holographic positioning mark can be identified by the pulse signals without encoding.

By encoding the above-mentioned optical track format, the relevant information in the lead-in area, the lead-out area and the start positioning marks of the optical track can be quickly identified.

The specific encoding method includes, as shown in FIG. 4, performing binary encoding by high and low levels of a level signal. "1" is encoded as a high level corresponding to the notch or the ascending end or descending end thereof, the duration of the high-level signal is defined as a code element length T; and "0" is encoded as a low level, the duration of a continuous low level is an integer multiple of the code element length, i.e. the number of "0".

As exemplary illustration, FIG. 4 shows encoding of the start positioning mark in a section of the optical track in form of concentric circles. The address field shows two sections of the ridge or the groove in FIG. 4, and the two ends of each notch respectively correspond to a high-level signal. The right end of the first notch from left to right corresponds to a high-level signal, encoding as "1"; the distance between the first notch and the second notch is 8T, thus encoding as 00000000; the distance between the second notch and the third notch is 8T, thus encoding as 00000000; the left and right ends of the second notch respectively correspond to two high-level signals, encoding as 1, respectively, and the middle corresponds to a low-level signal, encoding as 00; the left end of the third notch corresponds to a high level signal, encoding as 1. Code of the address field shown in FIG. 4 thus are 1000000001001000000001.

Preferably, in the start positioning mark, the front end and the back end are respectively a section of the optical track in a level signal corresponding to a certain unique waveform.

During moving of the incident light spot from left to right along the optical track, when the level signal of a certain unique waveform of the front end is identified, it indicates that the front end of the start positioning mark of the optical track is reached, and an optical track number and a sector number in the address field start to be read; when the level signal of a certain unique waveform of the back end is identified, it indicates that the back end of the start positioning mark is reached, the identification of the start positioning mark ends, then reading/writing of the data hologram in the sector starts, or moving to other positions to identify other start positioning marks.

By binary coding, the relevant information in the lead-in area, the lead-out area and the start positioning mark is recorded in the optical track. The binary encoding method proposed in this embodiment herein is simple and efficient, without involving a complicated encoding process, and can effectively screen out useful information in the optical track.

Obviously, the above-mentioned embodiments of the present invention are only examples for clearly illustrating the technical solutions of the present invention, and are not intended to limit the specific embodiments of the present invention. Any modifications, equivalent replacements, improvements, etc. made within the spirit and principles of the claims of the present invention shall be included within the protection scope of the claims of the present invention.

## Claims

1. An optical track format for a holographic storage optical disc, comprising
a lead-in area (3), which is configured for storing characteristic information, product information, and reading/writing parameters of the holographic storage optical disc, and calibration holograms for calibrating an incident light;
a data area (4), which is configured for recording data holograms loaded with data; and
a lead-out area (5), which is configured for storing sealing information of the holographic storage optical disc,
wherein the data area (4) is provided with two kinds of marks including data holographic positioning marks (2) for marking reading/writing position of the data holograms on an optical track, and start positioning marks (1) for marking position on the optical track where the data holograms start to be recorded, each start positioning mark (1) includes address encoding information,
the lead-in area (3) is provided with calibration holographic positioning marks (2) for marking position of the calibration holograms on the optical track, and
the data holographic positioning marks (2), start positioning marks (1), and calibration holographic positioning marks (2) on the optical track are capble of being positioned or read information therein by the incident light.

2. The optical track format for the holographic storage optical disc according to claim 1,
wherein the optical track comprises a plurality of ridges or grooves on an inner surface of a substrate of the holographic storage optical disc, each ridge or groove is provided with a plurality of notches, and each of two ends of each notch has a descending end with a reduced height and an ascending end with a raised height, and the reduced height and the raised height are equal, which are less than or equal to 1/4 of wavelength of an incident light,
the notches provided in the lead-in area (3) are configured for storing the characteristic information, product information, and reading/writing parameters of the holographic storage optical disc, and the calibration holograms for calibrating the incident light, and the notches provided in the lead-out area (5) are configured for storing the sealing information of the holographic storage optical disc;
each holographic positioning mark (2) includes one notch on the optical track or the ascending end or the descending end thereof;
each start positioning mark (1) includes at least one of the notches on the optical track and a plurality of sections of the ridges or grooves separated by the at least one of the notches.

3. The optical track format for the holographic storage optical disc according to claim 2, wherein
the optical track is in form of concentric circles with a certain spacing (tp), the optical track is divided into a plurality of sectors by the plurality of start positioning marks (1), and
the lead-in area (3) is formed by at least one of the concentric circles closest to a center of the optical disc, the lead-out area (5) is formed by at least one of the concentric circles furthest away from the center of the optical disc, and the data area (4) is formed by the concentric circles between the lead-in area (3) and the lead-out area (5).

4. The optical track format for the holographic storage optical disc according to claim 3, wherein each start positioning mark (1) comprises a front end, an address field and a back end, the address field is located between the front end and the back end, and the address field are recorded with optical track information and sector information.

5. The optical track format for the holographic storage optical disc according to claim 2, wherein the optical track is in form of an equidistant spiral line from the inside to the outside, the lead-in area (3) is formed by a plurality of spiral turns of the spiral line closest to a center of the optical disc, the lead-out area (5) is formed by a plurality of spiral turns of the spiral line furthest away from the center of the optical disc, the data area (4) is formed by the spiral turns of the spiral line between the lead-in area (3) and the lead-out area (5), and a head end and a tail end of the data area (4) is each provided with one start positioning mark (1).

6. The optical track format for the holographic storage optical disc according to claim 5, wherein the start positioning mark (1) comprises a front end and a back end.

7. The optical track format for the holographic storage optical disc according to any one of claims 1-6,
wherein when a spot of the incident light covers the ascending end and the descending end of each notch at the same time and is located at a center of the corresponding notch, light reflected is diverged into three light beams along the optical track direction, and light intensity of the light beams on sides are equal;
when a spot of the incident light covers the ascending end or the descending end of each notch and deviates from a center of the corresponding notch, light reflected is diverged into three light beams along the optical track direction, and light intensity of the light beams on sides are unequal, and
wherein the light beams reflected are received by a light intensity sensor to conduct comparison of the light intensity, and the light beams reflected is converted into an analogue voltage signal, which is referred to as a tangential push pull signal.

8. The optical track format for the holographic storage optical disc according to claim 7,
wherein each notch on the optical track has a fixed length so that the incident light spot covers both the ascending end and the descending end of each notch at the same time, the tangential push pull signal of the corresponding notch is converted into a single high-level signal, and the tangential push pull signal at the remaining positions is converted into a low-level signal.

9. The optical track format for the holographic storage optical disc according to claim 7,
wherein the incident light spot does not cover the ascending end and the descending end of each notch at the same time, the tangential push pull signal of the ascending end and the descending end of each notch is respectively converted into a high-level signal, and the tangential push pull signal at the remaining positions is converted into a low-level signal;

10. A method for encoding the optical track format for the holographic storage optical disc according to claim 8, comprising steps of performing binary encoding by a length of the optical track between two consecutive notches, the length of the optical track between two consecutive notches determines a time interval between the ascending edges of two consecutive high-level signal,
wherein spatial distance between the ascending ends of two consecutive data holographic positioning marks (2) or calibration holographic positioning marks (2) and the time interval between the ascending edges of two corresponding consecutive high-level signal are defined as a code element length T of a spatial domain and a time domain, respectively,
"0" is encoded as the optical track with a distance T between the ascending ends of two notches; and
"1" is encoded as the optical track with a distance nT between the ascending ends of two notches, in which n is a positive integer, n# 1.

11. The method for encoding according to claim 10, wherein
in the start positioning marks (1), distance between the ascending ends of the two notches on two sides of the front end or duration between corresponding ascending edges of the two high-level signals is aT, in which a is a positive integer, a>n, and
distance between the ascending ends of the two notches on two sides of the back end or duration between corresponding ascending edges of the two high-level signals is bT-(b+1)T, in which b is a positive integer, b>n, and b≠a, and the n, a and b is in different value.

12. A method for encoding the optical track format for the holographic storage optical disc according to claims 8 or 9, comprising steps of performing binary encoding by high or low level of a level signal,
wherein "1" is encoded as a high level corresponding to each notch or the ascending end or the descending end of the notch, duration of the high-level signal is defined as a code element length T, and
"0" is encoded as a low level, duration of the low level is an integer multiple of the code element length which is the number of "0".

13. The method for encoding according to claim 12, wherein the front end and the back end of each start positioning mark (1) are respectively a section of the optical track which is detected as a level signal with a unique waveform.
